# EUROPEAN PATENT SPECIFICATION

(11) **EP 1 674 387 B1**
(45) Date of publication and mention of the grant of the patent: **09.03.2011**
(21) Application number: 05028108.8
(22) Date of filing: 21.12.2005
(51) Int. Cl.: B62L 3/08, B62L 3/02, B62L 3/04

(54) **Brake device for a vehicle**
Bremsvorrichtung für ein Fahrzeug
Dispositif de freinage pour véhicule

(30) Priority: 21.12.2004 JP 2004368909; 18.11.2005 JP 2005334940
(43) Date of publication of application: 28.06.2006
(60) Divisional application: 10008147.0
(73) Proprietor: Yamaha Hatsudoki Kabushiki Kaisha, Iwata-shi, Shizuoka-ken (JP)
(72) Inventor: Takeuchi, Hitoshi c/o Yamaha Hatsudoki Kabushiki Kaisha, Iwata-shi Shizuoka-ken (JP)
(74) Representative: Grünecker, Kinkeldey, Stockmair & Schwanhäusser Anwaltssozietät

(56) References cited:
- EP-A- 1 475 797
- DE-C- 573 683
- FR-A- 694 973
- FR-A- 2 514 716
- JP-A- 7 293 610
- JP-A- 9 058 434
- JP-A- 2001 278 169

## Description

The present invention relates to a brake device for a vehicle, in particular comprising a braking force generating mechanism that generates a braking force when either a brake lever being manually operated or a brake pedal being foot-operated is manipulated, and to a saddle-ride type vehicle.

For example, a brake device adopted for motorcycles, etc. includes one, in which when a manipulating force is applied to a front wheel brake operating member (front wheel brake lever), a front wheel master cylinder generates hydraulic pressure, a front wheel brake caliper brakes a front wheel, a part of the manipulating force is transmitted to a rear wheel brake operating member (rear wheel brake lever) to cause a rear wheel master cylinder to generate hydraulic pressure, and a rear wheel brake caliper brakes a rear wheel (see JP-A-2001-88766).

With the brake device described in JP-A-2001-88766, both a front wheel braking force generating mechanism and a rear wheel braking force generating mechanism are operated even in the case where either the front wheel brake operating member or the rear wheel brake operating member is manipulated.

By the way, there is sometimes functionally desired a brake device that applies a braking force to a front wheel or a rear wheel even in the case where not only a brake lever but also a brake pedal is manipulated. With, for example, a rough terrain traveling small-sized vehicle, it is so in the case where a rider performs a work using both hands in a state of stoppage caused by manipulation of a brake pedal, in the case where braking is performed by a brake pedal while surely grasping a handle, to which a brake lever is mounted, and in the case where a foot on a side of a brake pedal treads the ground to prevent overtum while manipulating a brake lever with a view to stopping and keeping a motorcycle on a slope land.

In contrast, there is proposed an arrangement, in which a brake pedal comprises a pedal being foot-operated and an arm being pushed by the pedal to cause a master cylinder of a rear wheel braking force generating mechanism to generate hydraulic pressure, the arm and a brake lever being connected to each other by means of a length of wire cable (see JP-A-2000-313318). With the brake device, when the pedal is manipulated, the arm pushes a piston rod to generate hydraulic pressure in a brake liquid, so that a braking force is applied to a rear wheel. On the other hand, in the case where a brake lever is manipulated, a manipulating force is transmitted to the arm through the wire cable and the arm pushes a piston rod to apply a braking force on the rear wheel.

When a wire cable is provided on a path of transmission of a manipulating force from a brake lever to a braking force generating mechanism as in the brake device described in JP-A-2000-313318, however, there is a fear of generation of the following disadvantages and so there is a room for improvement. There is a fear that friction generated between an inner cable (wire member) and an outer cable of the wire cable is responsible for reduction in transmission efficiency of a manipulating force and so feeling of manipulation is degraded. Also, there is a fear that feeling of stiffness in manipulation is marred because of a slight extension of the inner cable upon application of tension.

In this respect, when all the path of transmission of a manipulating force is composed of a hydraulic system, an increase in transmission efficiency of a manipulating force is achieved and feeling of manipulation is improved. However, a brake device of this type is increased in cost as compared with the case where a wire cable is made use of.

The document EP 1 475 797 A discloses a vehicle with a front wheel, a rear wheel and a brake device . The brake device comprises :
a hand-operable brake lever including a manipulating force input member
a foot-operable brake pedal, said brake pedal and said manipulating force input member being interconnected by a wire cable, wherein at least a part of a manipulating force applied to the brake pedal is transmitted to the manipulating force input member of the brake lever and
a braking force generating mechanism configured to apply a braking force to the wheels of the vehicle by hydraulic pressure, wherein the manipulating force input member transmits the input manipulating force to the braking force generating mechanism.

The invention has been thought of in view of the situation in the related art and has its object to provide a vehicular brake device, in which a braking force is applied to a front wheel or a rear wheel even in the case where either a brake lever or a brake pedal is manipulated, while suppressing degradation in feeling of manipulation and an increase in cost, and a saddle-ride type vehicle.

**This object is solved by the features of claim 1.**

Therein, it is further preferable if the manipulating force is transmitted to the rear wheel braking force generating mechanism through the manipulating force input member of the brake lever to apply a braking force to the rear wheel, even in the case where either the brake lever or the brake pedal is manipulated.

According to another embodiment, the brake lever comprises a manually operable lever body.

Therein, preferably at a time of manipulation of the brake pedal, the manipulating force input member is configured to operate independently of the lever body to transmit the manipulating force to the rear wheel braking force generating mechanism, and, at a time of manipulation of the brake lever, the lever body is configured to push the manipulating force input member to input a manipulating force to the manipulating force input member.

According to a further embodiment, the front wheel and rear wheel the braking force generating mechanisms comprise hydraulic hoses and braking members configured to apply a braking force to the front wheel or the rear wheel, and wherein a manipulating force transmitted to the rear wheel braking force generating mechanism from the manipulating force input member of the brake lever is transmitted to the braking member through the hydraulic hose.

Further, preferably the front wheel and rear wheel braking force generating mechanisms comprise master cylinders configured to generate hydraulic pressure when a manipulating force is transmitted thereto, and a braking force is applied to the front wheel or to the rear wheel upon generation of hydraulic pressure in the master cylinder, and wherein the manipulating force input member of the brake lever transmits a manipulating force to the respective master cylinder.

Still further, preferably the brake device further comprises a support shaft configured to turnably support the manipulating force input member of the brake lever.

Yet further, preferably the manipulating force input member comprises a pedal manipulation input portion that is pulled by the wire cable to permit a manipulating force to be transmitted thereto from the brake pedal, wherein the pedal manipulation input portion of the manipulating force input member is positioned radially outwardly of the support shaft.

According to another preferred embodiment, the manipulating force input member comprises a lever manipulation input portion that is pushed by the lever body to permit a manipulating force to be input thereto, and the lever manipulation input portion of the manipulating force input member is positioned radially outwardly of the support shaft.

According to yet another preferred embodiment, the manipulating force input member comprises a change lever connecting portion connected to a gear change lever through a further wire cable, the change lever connecting portion being configured to pull the gear change lever when the brake pedal or the lever body is operated and the manipulating force input member is turned.

**The objective is further solved by a saddle-ride type vehicle.**

In the following, the present invention is explained in greater detail with respect to several embodiments thereof in conjunction with the accompanying drawings, wherein:
- Fig. 1: is a left side view showing a small-sized four-wheel vehicle provided with a brake device according to a first embodiment,
- Fig. 2: is a plan view showing the small-sized four-wheel vehicle,
- Fig. 3: is a view showing a fundamental construction of the brake device,
- Fig. 4: is a view showing an arrangement and a construction of the brake device,
- Fig. 5: is a side view showing a rear wheel brake lever provided on the brake device,
- Fig. 6: is a plan view showing the rear wheel brake lever,
- Fig. 7: is a plan view showing the rear wheel brake lever at the time of braking operation,
- Fig. 8: is a plan view showing the rear wheel brake lever at the time of braking operation,
- Fig. 9: is a view showing a manner, in which a driven arm engagement member for a wire cable engages with a pedal manipulation input portion of a driven arm,
- Fig. 10: is a view showing a fundamental construction of a brake device according to a second embodiment which is not part of the present invention, and
- Fig. 11: is a view showing an arrangement and a construction of the brake device according to the second embodiment.

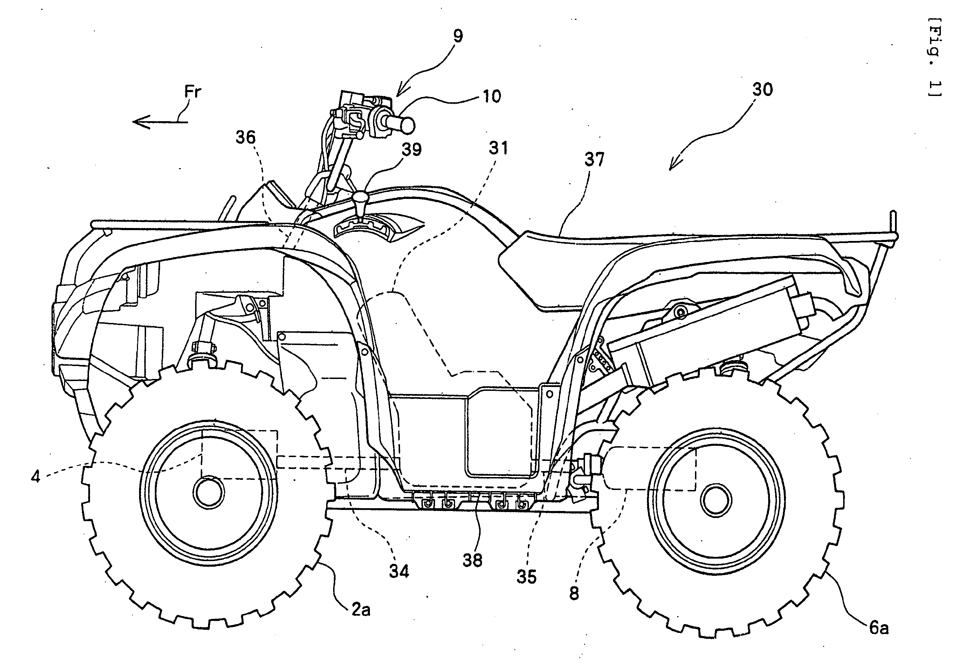

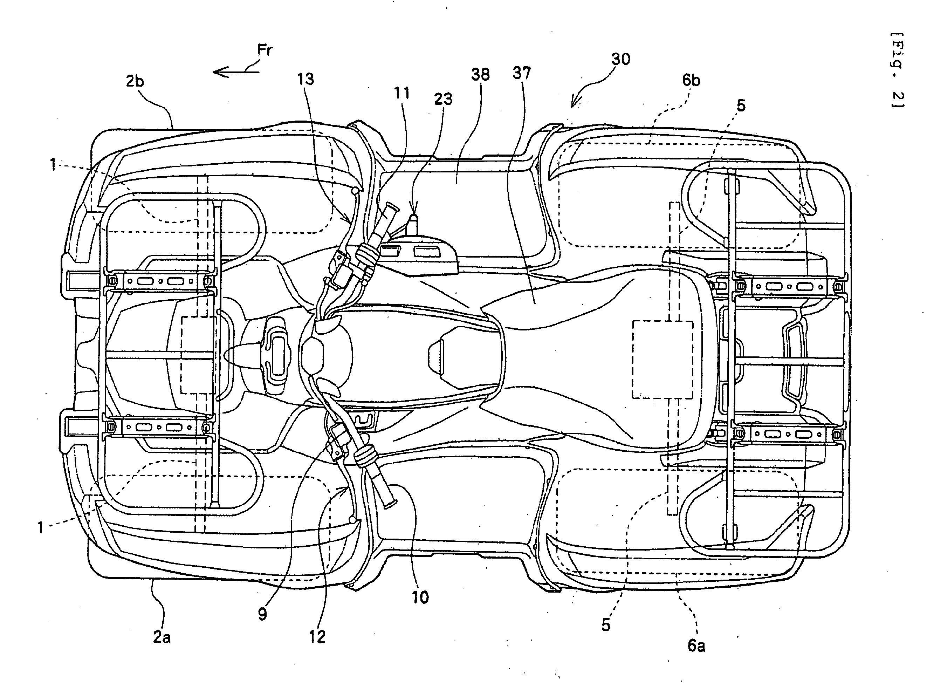

An embodiment will be described below with reference to the drawings. Fig. 1 is a side view showing a small-sized four-wheel vehicle 30 being an example of a saddle-ride type vehicle provided with a vehicular brake device according to a first embodiment, and Fig. 2 is a plan view showing the small-sized four-wheel vehicle 30.

The small-sized four-wheel vehicle 30 is a rough terrain traveling vehicle used for sport traveling on a rough terrain, farm work, or the like. The small-sized four-wheel vehicle 30 comprises an engine unit 31 arranged centrally of a vehicle body, left and right front wheels 2a, 2b arranged below a front portion of the vehicle body, and left and right rear wheels 6a, 6b arranged below a rear portion of the vehicle body. Connected to the engine unit 31 are a rear end of a front wheel output shaft 34 extending in a longitudinal direction of the vehicle body, and a front end of a rear wheel output shaft 35.

A front end of the front wheel output shaft 34 is connected to a front wheel differential mechanism 4. Connected to the front wheel differential mechanism 4 are front wheel axles 1, 1 extending in a left and right direction (vehicle breadth direction) and connected to the left and right front wheels 2a, 2b to transmit a driving force thereto. The driving force output from the engine unit 31 is distributed and transmitted to the left and right front wheels 2a, 2b by the front wheel differential mechanism 4.

A rear end of the rear wheel output shaft 35 is connected to a rear wheel differential mechanism 8. Connected to the rear wheel differential mechanism 8 are rear wheel axles 5, 5 extending in the left and right direction and connected to the left and right rear wheels 6a, 6b to transmit a driving force thereto. The driving force output from the engine unit 31 is distributed and transmitted to the left and right rear wheels 6a, 6b by the rear wheel differential mechanism 8.

Arranged forwardly and upwardly of the engine unit 31 is a bar handle 9 extending in the left and right direction and being used by a rider to steer a direction of advancement of a vehicle. Mounted centrally of the bar handle 9 is a steering shaft 36 extending obliquely downward and supported rotatably on a vehicle frame (not shown). The bar handle 9 mounts to a left end thereof a grip 10 and to a right end thereof a grip 11. Also, mounted to the bar handle 9 on a slightly right side (toward a center in the vehicle breadth direction) of the grip 10 is a rear wheel brake lever 12 that is manually operated to apply a braking force to the rear wheels 6a, 6b. Also, mounted to the bar handle 9 on a slightly left side (toward the center in the vehicle breadth direction) of the grip 11 is a front wheel brake lever 13 that is manually operated to apply a braking force to the front wheels 2a, 2b.

Arranged obliquely upwardly of the engine unit 31 is a seat 37, on which a rider is seated. Arranged below the left and right of the seat 37 are foot boards 38, on which a rider puts their feet. Arranged on a side of the right foot board 38 toward the center in the vehicle breadth direction is a brake pedal 23 that is foot-operated to apply a braking force to the rear wheels 6a, 6b (see Fig. 2). In addition, provided below the grip 10 is a change lever 39 that switches gears of a transmission provided on the engine unit 31.

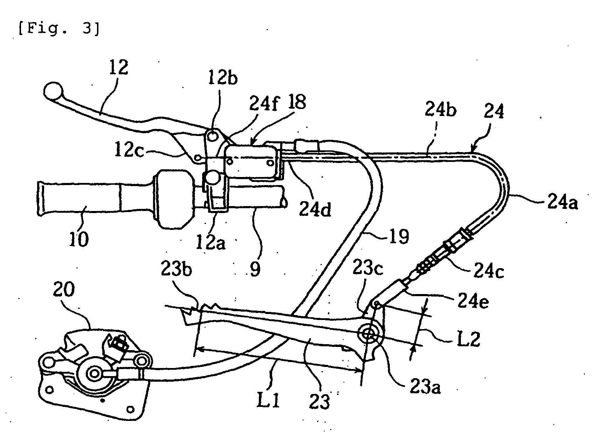

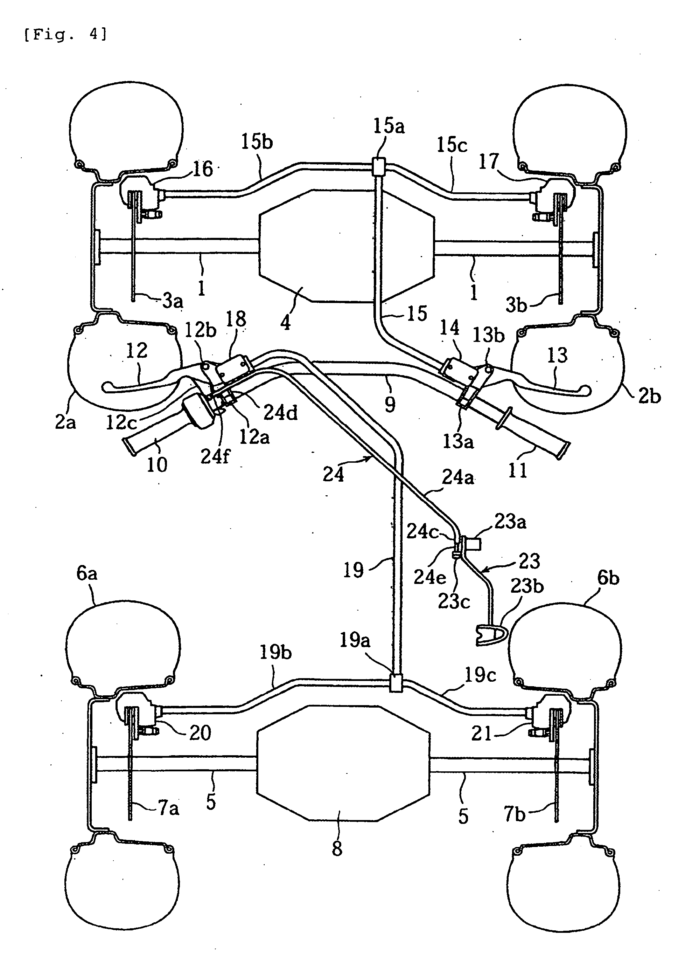

Here, the brake device provided on the small-sized four-wheel vehicle 30 will be described in detail with reference to Figs. 3 and 4. Fig. 3 is a view showing a fundamental construction of the brake device and Fig. 4 is a view showing an arrangement and a construction of the brake device.

In Fig. 4, fixed to lateral ends of the front wheel axles 1, 1 in the vehicle breadth direction are the left and right front wheels 2a, 2b. Front wheel brake disks 3a, 3b are arranged inside the left and right front wheels 2a, 2b. The front wheel brake disks 3a, 3b are mounted to the front wheel axles 1, 1 so as to rotate with the front wheel axles 1, 1. The front wheel brake disks 3a, 3b rotate with the front wheels 2a, 2b when a driving force is transmitted to the front wheels 2a, 2b from the front wheel axles 1, 1.

Also, the left and right rear wheels 6a, 6b are connected and fixed to lateral ends of the rear wheel axles 5, 5 in the vehicle breadth direction. Rear wheel brake disks 7a, 7b are arranged inside wheels of the left and right rear wheels 6a, 6b. The rear wheel brake disks 7a, 7b are mounted to the rear wheel axles 5, 5 so as to rotate with the rear wheel axles 5, 5. The rear wheel brake disks 7a, 7b rotate with the rear wheels 6a, 6b when a driving force is transmitted to the rear wheels 6a, 6b.

In addition, in Fig. 4, the reference numeral 9 denotes the bar handle arranged to be steerable left and right, and the grip 10 and the grip 11 are mounted to the left and right ends of the bar handle 9 as described above.

A right holder 13a is mounted to a portion of the bar handle 9 adjacent to the grip 11. The front wheel brake lever 13 is mounted to the bar handle 9 by the right holder 13a so that it can turn on a support pin (support shaft) 13b.

Mounted to the right holder 13a is a front wheel master cylinder 14 that generates hydraulic pressure when the front wheel brake lever 13 is turned this side (direction of left-handed rotation). The front wheel master cylinder 14 is connected to left and right front wheel brake calipers (braking members) 16, 17 through a hydraulic hose 15. The front wheel brake calipers 16, 17 interpose the left and right front wheel brake disks 3a, 3b to apply a braking force to the front wheels 2a, 2b. In addition, the hydraulic hose 15 branches into left and right branch pipes 15b, 15c with a branch joint 15a therebetween to be connected to the left and right brake calipers 16, 17. The front wheel master cylinder 14, the brake hose 15, the left and right front wheel brake calipers 16, 17, etc. constitute a front wheel braking force generating mechanism that generates hydraulic pressure when the front wheel brake lever 13 is turned this side.

A left holder 12a is mounted to a portion of the bar handle 9 adjacent to the grip 10. The rear wheel brake lever 12 is mounted to the bar handle 9 by the left holder 12a so that it can turn on a support pin (support shaft) 12b.

Mounted to the left holder 12a is a rear wheel master cylinder 18 that generates hydraulic pressure when the rear wheel brake lever 12 is manually operated. The rear wheel master cylinder 18 is connected to left and right rear wheel brake calipers (braking members) 20, 21 through a hydraulic hose 19. The rear wheel brake calipers 20, 21 interpose the left and right rear wheel brake disks 7a, 7b to apply a braking force to the rear wheels 6a, 6b. In addition, the hydraulic hose 19 branches into left and right branch pipes 19b, 19c with a branch joint 19a therebetween to be connected to the rear wheel brake calipers 20, 21.

A brake pedal 23 is able to swing vertically about a pivot shaft 23a. Also, the brake pedal 23 extends rearward from the pivot shaft 23a and is formed at a rear end thereof with a tread part 23b.

The brake pedal 23 and the rear wheel brake lever 12 are connected to each other by a brake cable (wire cable) 24. Specifically, the brake cable 24 is structured such that an inner cable 24b is inserted and arranged in an outer cable 24a to be axially movable relative thereto. The outer cable 24a has its rear end (an end toward the brake pedal 23) 24c supported by a vehicle body (not shown) and has its front end (an end toward the rear wheel brake lever 12) 24h supported by the left holder 12a of the bar handle 9. Also, the inner cable 24b has its rear end (an end toward the brake pedal 23) 24e connected to a drive arm 23c formed at a base end of the brake pedal 23. A front end (an end toward the brake lever 12) 24f is connected to a driven arm (a manipulating force input member) 12c provided at a base end of the rear brake lever 12. In this manner, a manipulating force (torque) applied to the tread type brake pedal 23 is transmitted to the manually operated type brake lever 12 through the brake cable 24.

The rear wheel master cylinder 18, the brake hose 19, the left rear wheel brake caliper 20, the right rear wheel brake caliper 21, the brake cable 24, etc. constitute a rear wheel braking force generating mechanism that generates hydraulic pressure when the rear wheel brake lever 12 is manually operated by the brake cable 24, etc., or the tread part 23b provided on the brake pedal 23 is trodden.

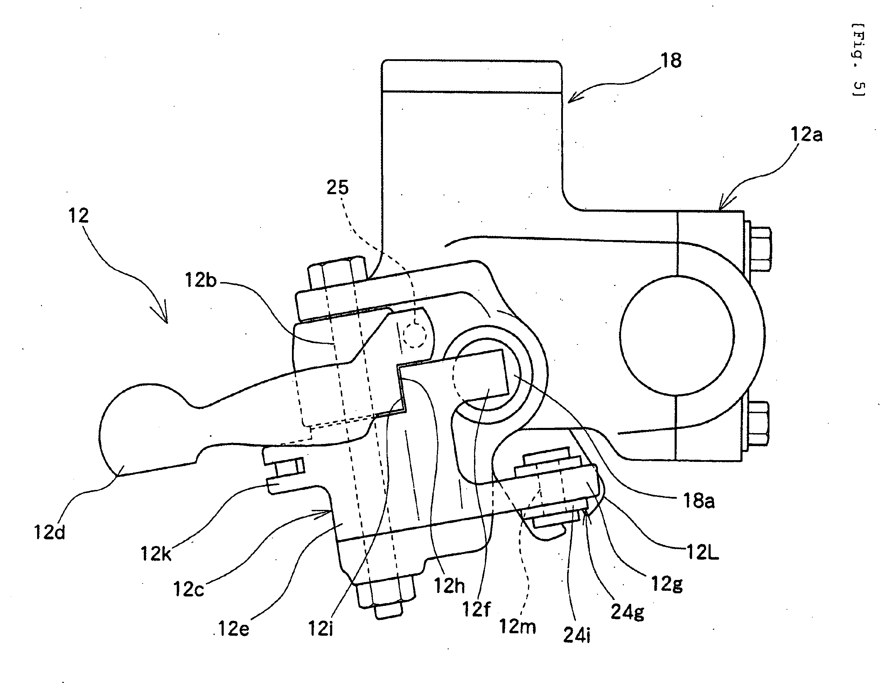

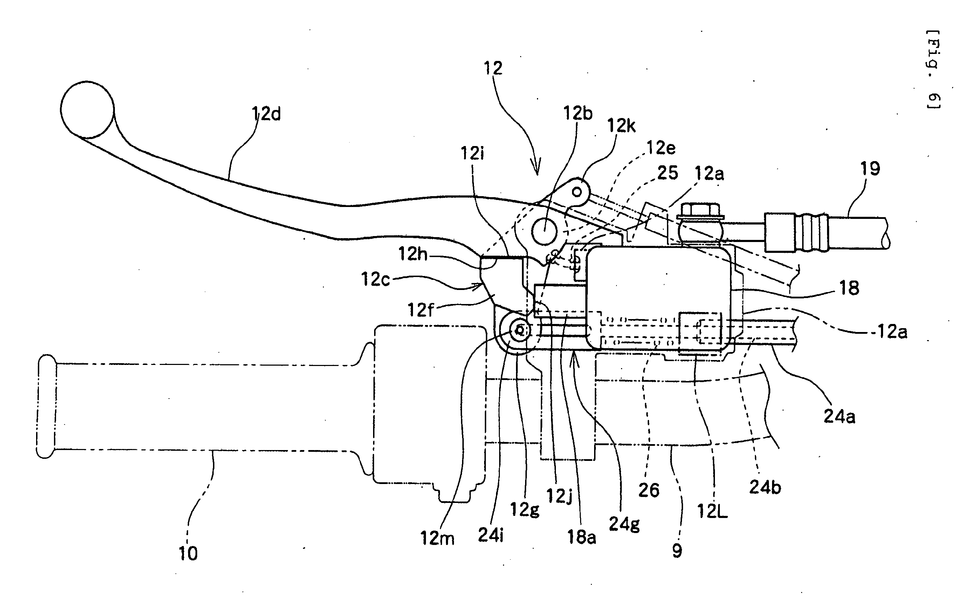

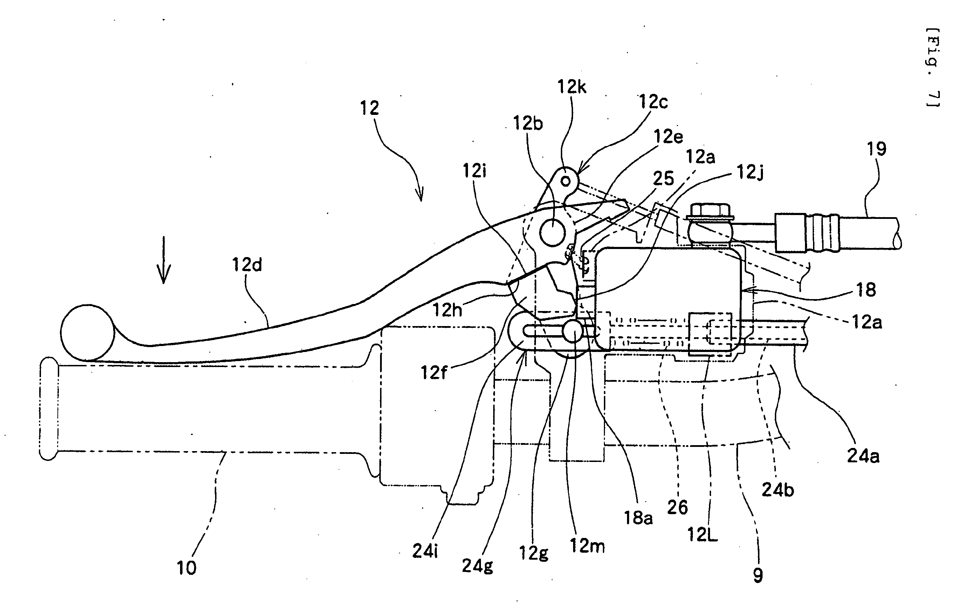

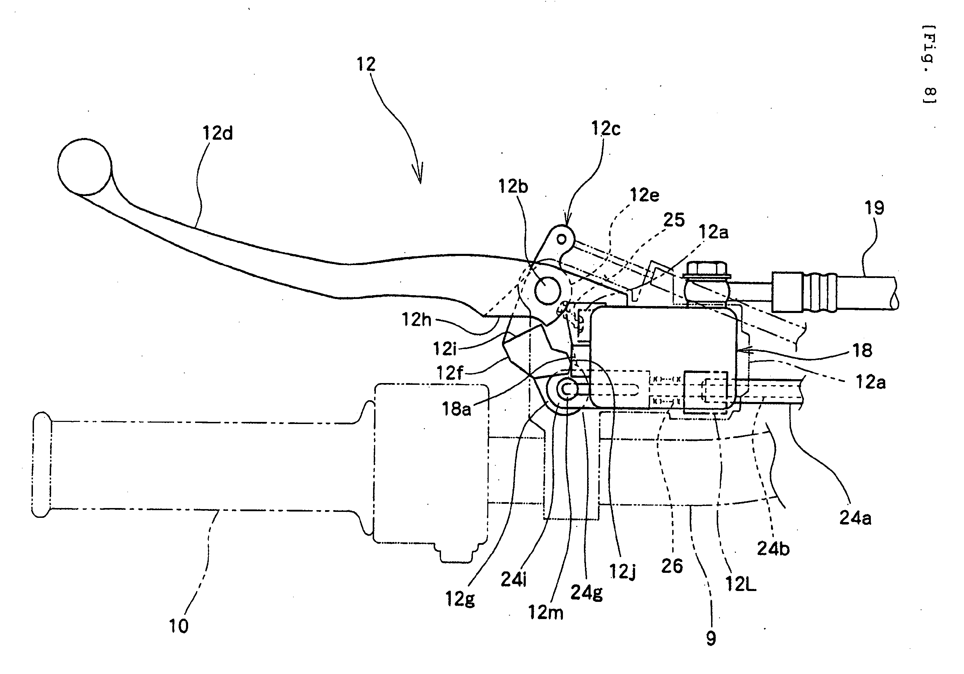

Here, the structure of the rear wheel brake lever 12 will be described in further detail. Fig. 5 is a left side view showing the rear wheel brake lever 12 and Fig. 6 is a plan view thereof. Also, Fig. 7 is a plan view showing the rear wheel brake lever 12 in a state of being manually operated and Fig. 8 is a plan view showing the rear wheel brake lever 12 when the brake pedal 23 is foot-operated. In addition, illustration of the bar handle 9 and the grip 10 is omitted in Fig. 5. Also, the grip 10, the bar handle 9, and the left holder 12a are indicated by two-dot chain lines in Figs. 6 to 8.

The rear wheel brake lever 12 comprises a lever body 12d, on which a rider sets a finger for manipulation. The lever body 12d has the support pin (support shaft) 12b inserted through a base end thereof and turns this side (direction of right-handed rotation) upon manipulation by a rider.

Also, as described above, the rear wheel brake lever 12 comprises the driven arm (a manipulating force input member) 12c. The driven arm 12c comprises a pin insertion portion 12e, through which the support pin 12b is inserted, and which is disposed axially adjacent to the lever body 12d, a manipulating force transmitting portion 12f, and a pedal manipulation input portion 12g (see Fig. 5). The manipulating force transmitting portion 12f is positioned radially outwardly of the support pin 12b. Also, the pedal manipulation input portion 12g is likewise positioned radially outwardly of the support pin 12b and toward an end of the support pin 12b relative to the manipulating force transmitting portion 12f.

The master cylinder 18 includes a pushed portion 18a projecting toward the grip 10 (leftward). The lever body 12d, the manipulating force transmitting portion 12f of the driven arm 12c, and the pushed portion 18a of the master cylinder 18 are arranged in this order circumferentially of the support pin 12b (see Fig. 6). In addition, when pushed at an end surface, the pushed portion 18a of the master cylinder 18 is contracted toward the master cylinder 18 (rightward) by the pushing force to generate hydraulic pressure in the brake liquid. Also, when the pushing force is released, the pushed portion projects again leftward.

The lever body 12d is formed with a pushing surface 12h that is in parallel to an axis of the support pin 12b and faces toward the driven arm 12c. The manipulating force transmitting portion 12f of the driven arm 12c is formed with a pushed surface (a lever manipulation input surface) 12i. The pushed surface 12i is in parallel to an axis of the support pin 12b and opposed to the pushing surface 12h of the lever body 12d. Further, the manipulating force transmitting portion 12f is formed with a master cylinder pushing surface 12j that is opposed to the end surface of the pushed portion 18a of the master cylinder 18.

Here, an explanation is given to a motion of the rear wheel brake lever 12 when the rear wheel brake lever 12 is manipulated. As shown in Fig. 7, when the lever body 12d is turned this side (direction of right-handed rotation), the pushing surface 12h of the lever body 12d pushes the pushed surface 12i provided on the driven arm 12c. Thereby, the driven arm 12c is also turned this side about the support pin 12b. At this time, the master cylinder pushing surface 12j of the driven arm 12c pushes the end surface of the pushed portion 18a of the master cylinder 18. Thereby, hydraulic pressure is generated in the brake liquid in the master cylinder 18, so that a braking force is applied to the rear wheels 6a, 6b.

Arranged between the left holder 12a and the lever body 12d is a spring 25 that biases the lever body 12d in the direction of left-handed rotation (a direction opposed to a direction of turning at the time of braking operation). Therefore, when a rider releases the lever body 12d, the lever body 12d turns in a direction opposed to the direction at the time of braking operation to return to its original position (see Fig. 6). At this time, the master cylinder pushing surface 12j pushes the pushed portion 18a of the master cylinder 18, and the driven arm 12c turns in the direction opposed to the direction at the time of braking operation to return to its original position. In addition, the inner cable 24b connected to the driven arm 12c is not operated at the time of braking operation performed by the rear wheel brake lever 12, which is described later in detail.

Here, a connecting construction of the driven arm 12c and the inner cable 24b is described in detail. The inner cable 24b is connected to the pedal manipulation input portion 12g, and the inner cable 24b pulls the pedal manipulation input portion 12g when the brake pedal 23 is manipulated. On the other hand, the inner cable 24b is connected to the pedal manipulation input portion 12g so as not to be pushed by the pedal manipulation input portion 12g when the rear wheel brake lever 12 is manipulated.

Specifically, an end of the outer cable 24a toward the rear wheel brake lever 12 is supported on a cable support 12L formed integral with the left holder 12a. An engagement pin 12m is inserted through the pedal manipulation input portion 12g. The inner cable 24b projects further leftward from the end of the outer cable 24a and a driven arm engagement member 24g engaging with the engagement pin 12m is mounted to an end of the inner cable 24b.

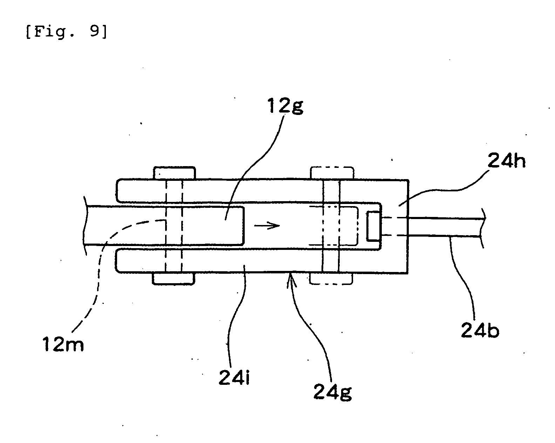

Fig. 9 is a view showing a manner, in which the driven arm engagement member 24g engages with the pedal manipulation input portion 12g. The driven arm engagement member 24g includes a cable mount 24h, to which the inner cable 24b is mounted, and a pair of upper and lower pin engaging portions 24i provided upright on an edge of the cable mount 24h to extend toward the driven arm 12c (leftward). The pin engaging portions 24i are formed with slots, which extend in a direction (the left and right direction), in which the pin engaging portions 24i extend. The pair of upper and lower pin engaging portions 24i interpose therebetween the pedal manipulation input portion 12g and ends of the engagement pin 12m project vertically from the slots of the pin engaging portions 24i. The pedal manipulation input portion 12g can move together with the engagement pin 12m along the slots formed on the pin engaging portions 24i in the left and right direction (vehicle breadth direction) (see Fig. 7).

Therefore, when the driven arm 12c is turned this side (direction of right-handed rotation) at the time of operation of the rear wheel brake lever 12, the engagement pin 12m moves rightward along the slots formed on the pin engaging portions 24i and the driven arm 12c operates independently of the pin engaging portions 24i and the inner cable 24b (see two-dot chain lines in Figs. 7 and 9). In addition, the ends of the engagement pin 12m are formed to be larger in diameter than an intermediate portion thereof in order to prevent coming-off.

Here, an explanation is given to motions of the driven arm engagement member 24g and the driven arm 12c when the brake pedal 23 is manipulated. When the brake pedal 23 is manipulated, the inner cable 24b and the driven arm engagement member 24g move rightward. At this time, the engagement pin 12m engages with left ends of the slots formed on the pin engaging portions 24i and the pedal manipulation input portion 12g is pulled rightward. Thereby, the driven arm 12c is turned this side (direction of right-handed rotation) and the master cylinder pushing surface 12j pushes the end surface of the pushed portion 18a of the master cylinder 18. As a result, hydraulic pressure is generated in the brake liquid in the master cylinder 18, so that a braking force is applied to the rear wheels 6a, 6b. In addition, when the brake pedal 23 is manipulated, the pushed surface 12i of the driven arm 12c separates from the pushing surface 12h of the lever body 12d and the driven arm 12c is turned independently of the lever body 12d.

Arranged between the cable mount 24h of the driven arm engagement member 24g and the cable support 12L is a spring 26 that biases the driven arm engagement member 24g leftward. Therefore, when the brake pedal 23 is released, the inner cable 24b together with the driven arm engagement member 24g moves leftward to return to its original position. Also, the master cylinder pushing surface 12j is pushed to the pushed portion 18a of the master cylinder 18 and the driven arm 12c turns in the direction (direction of left-handed rotation) opposed to a direction of turning at the time of braking operation to return to its original position.

In addition, the driven arm 12c includes a change lever connecting portion 12k, which is connected to the change lever 39 through a length of wire, on a side thereof opposed to the manipulating force transmitting portion 12f with the support pin 12b therebetween. The change lever connecting portion 12k pulls the lever when the brake pedal 23 or the lever body 12d is operated and the driven arm 12c is turned. The change lever 39 can be set to backgear under the condition that the lever is pulled.

With the brake device, when the front wheel brake lever 13 is turned this side, the front wheel master cylinder 14 generates hydraulic pressure and the hydraulic pressure is transmitted to the left and right front wheel brake calipers 16, 17 through the hydraulic hose 15. The front wheel brake calipers 16, 17 interpose the front wheel brake disks 3a, 3b to apply a braking force to the front wheels 2a, 2b.

On the other hand, when the rear wheel brake lever 12 is turned this side, the rear wheel master cylinder 18 generates hydraulic pressure and the hydraulic pressure is transmitted to the left and right rear wheel brake calipers 20, 21 through the hydraulic hose 19. The rear wheel brake calipers 20, 21 interpose the rear wheel brake disks 7a, 7b to apply a braking force to the rear wheels 6a, 6b.

Further, when the brake pedal 23 is operatively turned downward (foot-operated), the manipulating force thus applied is transmitted to the driven arm 12c of the rear wheel brake lever 12 through the brake cable 24. The driven arm 12c is turned this side (direction of right-handed rotation) and the master cylinder 18 generates hydraulic pressure, so that a braking force is applied to the rear wheels 6a, 6b in the same manner as in the case where the rear wheel brake lever 12 is operatively turned.

In this manner, since the brake pedal 23 and the rear wheel brake lever 12 are connected to each other by the brake cable 24, a braking force can be applied to the rear wheels 6a, 6b both in the case where the rear wheel brake lever 12 is turned this side and in the case where the brake pedal 23 is operatively turned downward. In this case, since a manipulating force for the tread type brake pedal 23 is transmitted to the driven arm 12c of the manually operated type rear wheel brake lever 12 through the brake cable 24, it is possible to avoid degradation in feeling of manipulation while adopting the brake cable 24, which is liable to be slightly extended upon application of tension, and suppressing an increase in cost.

That is, a system, in which a manipulating force is transmitted through a length of brake cable, involves a fear that feeling of stiffness in manipulation decreases as compared with the hydraulic system because of a slight extension of an inner cable upon application of tension. Also, there is a fear that friction between an inner cable and an outer cable is responsible for reduction in transmission efficiency of a manipulating force and degradation in feeling of manipulation. This is because it is thought that, for example, a driver feels that a braking force conformed to a manipulating force applied by them is not generated. With the embodiment, the brake pedal 23 is of the tread type, so that a manipulating force as input becomes large as compared with that by the brake lever, which is manually operated. Therefore, freedom in setting a lever ratio ε (= arm length L1 of the brake pedal 23/arm length L2 of the drive arm 23c) is high. Accordingly, feeling of stiffness, feeling of manipulation, etc. can be improved by appropriately selecting the lever ratio. By, for example, increasing the arm length L2 with the arm length L1 constant to decrease the lever ratio ε, influences of extension of the inner cable and friction on an amount of manipulation, which is input by a treading manipulation, become small and feeling of stiffness and feeling of manipulation are improved.

Also, the brake pedal 23 is foot-operated by a rider and so a large manipulating force is input as compared with that in the manual operation. Therefore, even in the case where the lever ratio ε is set to be small, there hardly causes a problem that a rider feels that manipulation of a brake is heavy.

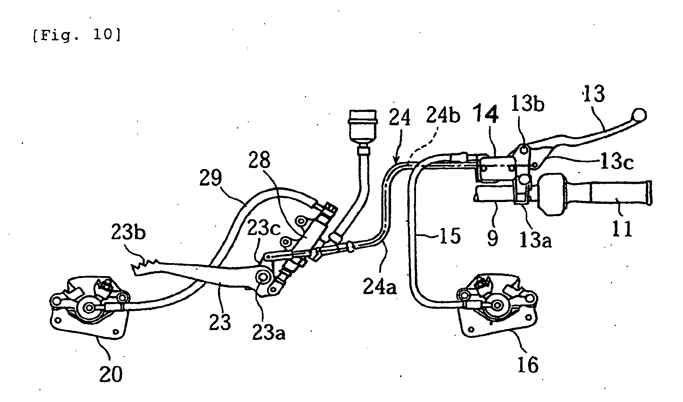

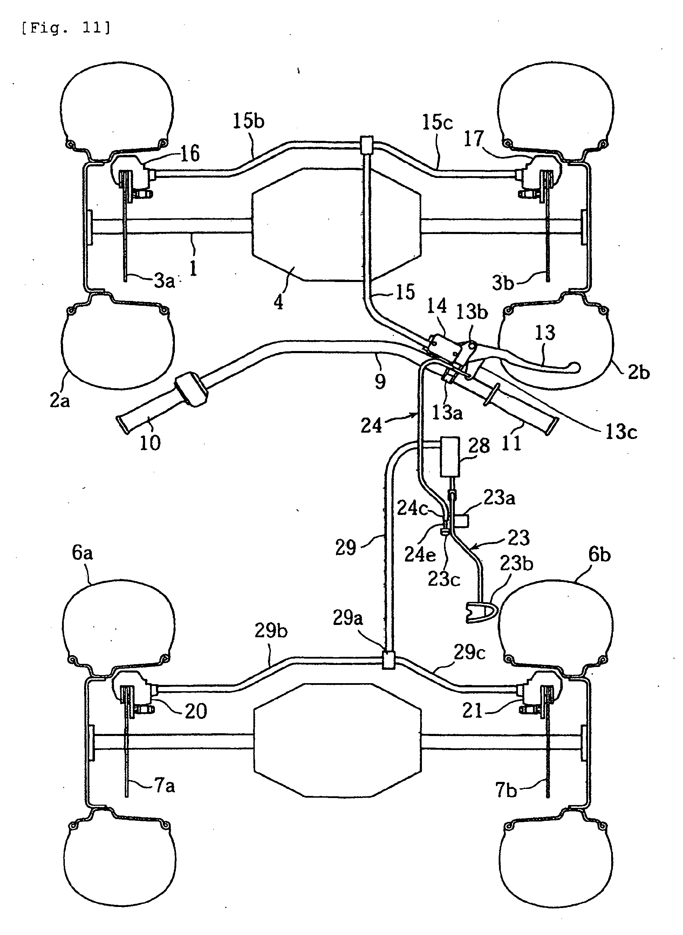

A second embodiment which is not an embodiment according to the present invention will be described with reference to Figs. 10 and 11. Fig. 10 is a view showing a fundamental construction of a brake device according to the second embodiment and Fig. 11 is a view showing an arrangement and a construction of the brake device. In the figures, the same parts as those in the first embodiment are denoted by the same reference numerals as those in the latter, and an explanation therefor is omitted. Also, since a front wheel brake lever 13 is the same in structure as the rear wheel brake lever 12 in the first embodiment, an explanation therefor is omitted.

The second embodiment is constructed so that a braking force is applied to front wheels 2a, 2b even when either the front wheel brake lever 13 or a brake pedal 23 is manipulated. Also, in the case where the brake pedal 23 is manipulated, a braking force is also applied to rear wheels 6a, 6b in addition to braking of the front wheels 2a, 2b.

Arranged in the vicinity of the brake pedal 23 is a rear wheel master cylinder 28 that generates hydraulic pressure when the brake pedal 23 is operatively turned. The rear wheel master cylinder 28 is connected through a hydraulic hose (brake hose) 29, a branch joint 29a, and branch pipes 29b, 29c to left and right rear wheel brake calipers 20,21.

With the brake device according to the second embodiment, when the front brake lever 13 is turned this side, a front wheel master cylinder 14 generates hydraulic pressure in the same manner as in the first embodiment to apply a braking force to the front wheels 2a, 2b. On the other hand, when the brake pedal 23 is operatively turned downward, a part of the applied manipulating force is transmitted to a manipulating force input member 13c provided on the front brake lever 13 through a length of brake cable 24. The manipulating force input member 13c of the front wheel brake lever 13 is turned this side, the front wheel master cylinder 14 generates hydraulic pressure, and the hydraulic pressure brakes the front wheels 2a, 2b in the same manner as in the case where the front wheel brake lever 13 is operatively turned directly.

Further, the remainder of the manipulating force on the brake pedal 23 causes the rear wheel master cylinder 28 to generate hydraulic pressure, and the hydraulic pressure brakes the rear wheels 6a, 6b.

In this manner, with the second embodiment, a braking force is applied to only the front wheels 2a, 2b in the case where the front brake lever 13 is manipulated. Also, a braking force is applied to both the front wheels 2a, 2b and the rear wheels 6a, 6b in the case where only the brake pedal 23 is manipulated. Accordingly, for example, when a rider steps on the brake pedal 23 in a state of riding on a small-sized vehicle, on which the brake device according to the second embodiment is mounted, the front and rear wheels are braked at the same time. As a result, hands are made free in a state, in which the vehicle is surely stopped, so that a rider can perform another work using hands in a stable state. Also, in the case where a braking force is applied to the front and rear wheels at the same time, a large braking force is generated as compared with braking of only the front wheels or the rear wheels, so that it is possible to further surely stop the vehicle.

In addition, while the first and second embodiments have been described with respect to a rough terrain traveling small-sized four-wheel vehicle, a scope, to which the teaching of the embodiments is applied, is not limited thereto but application to, for example, motorcycles is also possible.

Also, in the first and second embodiments, the brake pedal 23 extends rearward from the pivot shaft 23a but the brake pedal 23 may extend forward and a tread part 23b may be formed at a front end thereof.

The description above discloses (amongst others) an embodiment of a vehicular brake device comprising a brake lever including a manipulating force input member and manually operated, a brake pedal being foot-operated, and a braking force generating mechanism that applies a braking force to a front wheel or a rear wheel, wherein the manipulating force input member and the brake pedal are connected to each other by a length of wire cable so that at least a part of the manipulating force applied to the brake pedal is transmitted to the manipulating force input member of the brake lever, and even in the case where either the brake lever or the brake pedal is manipulated, a manipulating force is transmitted to the braking force generating mechanism through the manipulating force input member of the brake lever to apply a braking force to the front wheel or the rear wheel.

Accordingly, a manipulating force input from the brake pedal being foot-operated is transmitted to the braking force generating mechanism not by hydraulic pressure but through the wire cable, so that an increase in cost is suppressed. Also, the construction in which a manipulating force input from the brake lever is transmitted to the braking force generating mechanism not through the wire cable can be made, so that it is possible to suppress reduction in feeling of stiffness in manipulation and degradation in feeling of manipulation.

According to the embodiment, however, since a manipulating force is transmitted from the brake pedal through the wire cable, reduction in feeling of stiffness in manipulation is caused due to extension of the inner cable and reduction in transmission efficiency is caused due to friction between an inner cable and an outer cable, so that there is a fear of causing degradation in feeling of manipulation. However, the applicant of the present application has found that a rider is hardly susceptible to influences of the reduction in transmission efficiency and the reduction in feeling of stiffness since a manipulating force generated by a treading manipulation is generally large as compared with that generated by a manual operation. According to the embodiment, since the brake pedal is connected to the manipulating force input member through the wire cable, a large manipulating force produced by a foot operation is transmitted to the manipulating force input member through the wire cable. Therefore, a rider is hardly susceptible to influences of reduction in transmission efficiency and reduction in feeling of stiffness, so that degradation in feeling of manipulation is suppressed.

Also, according to the embodiment, not only a manipulating force input from the brake lever but also a manipulating force input from the brake pedal is transmitted to the braking force generating mechanism through the manipulating force input member, so that a braking force is applied to the front wheel or the rear wheel even in the case where either the brake lever or the brake pedal is manipulated.

According to a further embodiment, the brake lever comprises a lever body, on which a finger is set for manipulation, at the time of manipulation of the brake pedal, the manipulating force input member operates independently of the lever body to transmit a manipulating force to the braking force generating mechanism, and at the time of manipulation of the brake lever, the lever body pushes the manipulating force input member to input a manipulating force to the manipulating force input member and the manipulating force input member transmits the input manipulating force to the braking force generating mechanism.

According to this embodiment, at the time of manipulation of the brake pedal, the manipulating force input member operates independently of the lever body, so that loss in a manipulating force otherwise generated when the lever body operates is not generated and so operability is improved. Also, since the lever body pushes the manipulating force input member to input a manipulating force to the manipulating force input member, feeling of stiffness in manipulation is improved.

Also, according to a further embodiment, the braking force generating mechanism comprises a hydraulic hose and a braking member that applies a braking force to the front wheel or the rear wheel, and a manipulating force transmitted to the braking force generating mechanism from the manipulating force input member of the brake lever is transmitted to the braking member through the hydraulic hose.

According to this embodiment, since a manipulating force is transmitted to the braking member through the hydraulic hose, feeling of stiffness in manipulation is improved.

Also, according to a further embodiment, the braking force generating mechanism comprises a master cylinder that generates hydraulic pressure when a manipulating force is transmitted thereto, and a braking force is applied to the front wheel or the rear wheel upon generation of hydraulic pressure in the master cylinder, and the manipulating force input member of the brake lever transmits a manipulating force to the master cylinder of the braking force generating mechanism.

According to this embodiment, since a manipulating force is transmitted to the master cylinder, freedom in layout of the manipulating force input member is increased.

Also, according to a further embodiment, a support shaft that supports the manipulating force input member of the brake lever turnably is further provided, the manipulating force input member comprises a pedal manipulation input portion that is pulled by the wire cable to permit a manipulating force to be transmitted thereto from the brake pedal, and the pedal manipulation input portion of the manipulating force input member is positioned radially outwardly of the support shaft.

According to this embodiment, since the pedal manipulation input portion being pulled by the wire cable is positioned radially outwardly of the support shaft, distortion of the manipulating force input member caused when pulled by the wire cable is suppressed.

Also, according to a further embodiment, a support shaft that supports the manipulating force input member of the brake lever turnably is further provided, the brake lever comprises a lever body, on which a finger is set for manipulation, the manipulating force input member comprises a lever manipulation input portion that is pushed by the lever body to permit a manipulating force to be input thereto, and the lever manipulation input portion of the manipulating force input member is positioned radially outwardly of the support shaft.

According to this embodiment, since the lever manipulation input portion being pushed by the lever body is positioned radially outwardly of the support shaft, distortion of the manipulating force input member caused when pushed by the lever body is suppressed.

Also, the saddle-ride type vehicle according to the embodiment comprises the vehicular brake device according to any one of the above embodiments. With the saddle-ride type vehicle according to the embodiment, since the foot-operated brake pedal is connected to the wire cable, reduction in feeling of stiffness in manipulation and degradation in feeling of manipulation are improved. It is noted that saddle-ride type vehicles referred to herein include, for example, four-wheeled buggies (overall terrain type vehicles), motorcycles (include bicycles with a motor, scooters), etc.

The description above discloses, as a particularly preferred embodiment, in order to provide a vehicular brake device capable of improving a feeling of manipulation, a vehicular brake device comprises a brake lever 12 including a manipulating force input member 12c and being manually operated, a brake pedal 23 being foot-operated, and a braking force generating mechanism that applies a braking force to front wheels 2a, 2b or rear wheels 6a, 6b. The manipulating force input member 12c and the brake pedal 23 are connected to each other by a length of wire cable 24 so that at least a part of a manipulating force applied to the brake pedal 23 is transmitted to the manipulating force input member 12c. The braking force generating mechanism applies a braking force to front wheels 2a, 2b or rear wheels 6a, 6b even in the case where either the brake lever 12 or the brake pedal 23 is manipulated.

## Claims

1. Vehicle with a front wheel (2a, 2b), a rear wheel (6a, 6b) and a brake device, the brake device comprising:
a first hand-operable brake lever (12) including a manipulating force input member (12c), a second hand - operable brake lever(13),
a foot-operable brake pedal (23), said brake pedal (23) and said manipulating force input member (12c) being interconnected by a wire cable (24), wherein at least a part of a manipulating force applied to the brake pedal (23) is transmitted to the manipulating force input member (12c) of the first brake lever (12), and
a braking force generating mechanism comprising a front wheel braking force generating mechanism (14, 15, 16, 17) configured to apply a braking force to the front wheel (2a 2b) of the vehicle, and a rear wheel braking force generating mechanism (18, 19, 20, 21, 24) configured to apply a braking force to the rear wheel (6a, 6b) of the vehicle, wherein
the first hand-operable brake lever (12) is a rear wheel brake lever,
the manipulating force input member (12c) of the rear wheel brake lever transmits the input manipulating force to the rear wheel braking force generating mechanism (18, 19, 20, 21, 24), and the
second hand-operable brake lever (13) is a front wheel brake lever operating the front wheel braking force generating mechanism (14, 15, 16, 17).

2. Vehicle according to claim 1, **characterized in that** the manipulating force is transmitted to the rear wheel braking force generating mechanism (18, 19, 20, 21, 24) through the manipulating force input member (12c) of the first brake lever (12) to apply a braking force to the rear wheel (6a, 6b), even in the case where either the first brake lever (12) or the brake pedal (23) is manipulated.

3. Vehicle according to claim 1 or 2, **characterized in that** the first brake lever (12) comprises a manually operable lever body (12d).

4. Vehicle according to claim 3, **characterized in that**, at a time of manipulation of the brake pedal (23), the manipulating force input member (12c) is configured to operate independently of the lever body (12d) to transmit the manipulating force to the rear wheel braking force generating mechanism (18, 19, 20, 21, 24), and wherein, at a time of manipulation of the first brake lever (12), the lever body (12d) is configured to push the manipulating force input member (12c) to input a manipulating force to the manipulating force input member (12c).

5. Vehicle according to one of the claims 1 to 4, **characterized in that** the front wheel and rear wheel braking force generating mechanisms (14, 15, 16, 17; 18, 19, 20, 21, 24) comprise hydraulic hoses (15, 19) and braking members (3a, 3b, 7a, 7b) configured to apply a braking force to the front wheel (2a, 2b) or the rear wheel (6a, 6b), wherein a manipulating force transmitted to the rear wheel braking force generating mechanism (18, 19, 20, 21, 24) from the manipulating force input member (12c) of the first brake lever (12) is transmitted to the braking member (7a, 7b) through the hydraulic hose (19).

6. Vehicle according to one of the claims 1 to 5, **characterized in that** the front wheel and rear wheel braking force generating mechanisms (14, 15, 16, 17; 18, 19, 20, 21, 24) comprise master cylinders (14, 18) configured to generate hydraulic pressure when a manipulating force is transmitted thereto, and a braking force is applied to the front wheel (2a, 2b) or to the rear wheel (6a, 6b) upon generation of hydraulic pressure in the master cylinder (14, 18), and wherein the manipulating force input member (12c) of the first brake lever (12) transmits a manipulating force to the respective master cylinder (14, 18).

7. Vehicle according to one of the claims 1 to 6, **characterized by** a support shaft (12b) configured to turnably support the manipulating force input member (12c) of the brake lever (12).

8. Vehicle according to claim 7, **characterized in that** the manipulating force input member (12c) comprises a pedal manipulation input portion (12g) that is pulled by the wire cable (24) to permit a manipulating force to be transmitted thereto from the brake pedal (23), wherein the pedal manipulation input portion (12g) of the manipulating force input member (12c) is positioned radially outwardly of the support shaft (12b).

9. Vehicle according to claim 7 or 8, **characterized in that** the manipulating force input member (12c) comprises a lever manipulation input portion (12i) that is pushed by the lever body (12d) to permit a manipulating force to be input thereto, and the lever manipulation input portion (12i) of the manipulating force input member (12c) is positioned radially outwardly of the support shaft (12b).

10. Vehicle according to one of the claims 1 to 9, **characterized in that** the manipulating force input member (12c) comprises a change lever connecting portion (12k) connected to a gear change lever (39) through a further wire cable, the change lever connecting portion (12k) being configured to pull the gear change lever (39) when the brake pedal (23) or the lever body (12d) is operated and the manipulating force input member (12c) is turned.

11. Vehicle according to one of the claims 1 to 10, **characterized in that** the vehicle being a saddle-ride type vehicle.

## Patentansprüche

1. Fahrzeug mit einem Vorderrad (2a, 2b), einem Hinterrad (6a, 6b) und einer Bremsvorrichtung, wobei die Bremsvorrichtung aufweist:
einen mit erster Hand betätigbaren Bremshebel (12), enthaltend ein Betätigungskraft-Eingabeteil (12c), einen mit zweiter Hand betätigbaren Bremshebel (13),
ein per Fuß betätigbares Bremspedal (23), wobei das Bremspedal (23) und das Betätigungskraft- Eingabeteil (12c) durch ein Drahtkabel (24) verknüpft sind, wobei zumindest ein Teil einer Betätigungskraft, aufgebracht auf das Bremspedal (23) auf das Betätigungskraft- Eingabeteil (12c) des ersten Bremshebels (12) übertragen wird, und
eine Bremskraft- Erzeugungsvorrichtung, aufweisend eine Vorderrad- Bremskraft-Erzeugungsvorrichtung (14, 15, 16, 17), konfiguriert, eine Bremskraft auf das Vorderrad (2a, 2b) des Fahrzeuges aufzubringen, und eine Hinterrad- Bremskraft- Erzeugungsvorrichtung (18, 19, 20, 21, 24), konfiguriert eine Bremskraft auf das Hinterrad (6a, 6b) aufzubringen, wobei
der mit erster Hand betätigbare Bremshebel (12) ein Hinterrad- Bremshebel ist,
das Betätigungskraft- Eingabeteil (12c) des Hinterrad- Bremshebels die Eingabe- Betätigungskraft auf die Hinterrad- Bremskraft- Erzeugungsvorrichtung (18, 19, 20, 21, 24) überträgt, und
der mit zweiter Hand betätigbare Bremshebel (13) ein Vorderrad- Bremshebel ist, der die Vorderrad- Bremskraft- Erzeugungsvorrichtung (14, 15, 16, 17) betätigt.

2. Fahrzeug nach Anspruch 1, **dadurch gekennzeichnet, dass** die Betätigungskraft auf die Hinterrad- Bremskraft- Erzeugungsvorrichtung (18, 19, 20, 21, 24) durch das Betätigungskraft- Eingabeteil (12c) des ersten Bremshebels (12) übertragen wird, um eine Bremskraft auf das Hinterrad (6a, 6b) selbst in dem Fall aufzubringen, wenn entweder der erste Bremshebel (12), oder das Bremspedal (23) betätigt werden.

3. Fahrzeug nach Anspruch 1 oder 2, **dadurch gekennzeichnet, dass** der erste Bremshebel (12) einen per Hand betätigbaren Hebelkörper (12d) aufweist.

4. Fahrzeug nach Anspruch 3, **dadurch gekennzeichnet, dass** zu einer Zeit der Betätigung des Bremspedals (23) das Betätigungskraft- Eingabeteil (12c) konfiguriert ist, unabhängig von dem Hebelkörper (12d) zu arbeiten, um die Betätigungskraft auf die Hinterrad- Bremskraft- Erzeugungsvorrichtung (18, 19, 20, 21, 24) zu übertragen, und wobei, zu einer Zeit der Betätigung des ersten Bremshebels (12), der Hebelkörper (12d) konfiguriert ist, das Betätigungskraft- Eingabeteil (12c) zu drücken, um eine Betätigungskraft auf das Betätigungskraft- Eingabeteil (12c) einzugeben.

5. Fahrzeug nach einem der Ansprüche 1 bis 4, **dadurch gekennzeichnet, dass** die Vorderrad- und Hinterrad- Bremskraft- Erzeugungsvorrichtung (14, 15, 16, 17; 18, 19, 20, 21, 24) Hydraulikschläuche (15, 19) und Bremsteile (3a, 3b, 7a, 7b) aufweisen, konfiguriert, eine Bremskraft auf das Vorderrad (2a, 2b) oder das Hinterrad (6a, 6b) aufzubringen, wobei eine Betätigungskraft, übertragen auf die Hinterrad- Bremskraft- Erzeugungsvorrichtung (18, 19, 20, 21, 24) von dem Betätigungskraft- Eingabeteil (12c) des ersten Bremshebels (12) auf das Bremsteil (7a, 7b) durch den Hydraulikschlauch (19) übertragen wird.

6. Fahrzeug nach Anspruch 1 bis 5, **dadurch gekennzeichnet, dass** die Vorderrad- und Hinterrad- Bremskraft- Erzeugungsvorrichtung (14, 15, 16, 17; 18, 19, 20, 21, 24) Hauptzylinder (14, 18) aufweisen, konfiguriert, den hydraulischen Druck zu erzeugen, wenn eine Betätigungskraft zu diesen übertragen wird, und eine Bremskraft auf das Vorderrad (2a, 2b) oder auf das Hinterrad (6a, 6b) während der Erzeugung des hydraulischen Druckes in dem Hauptzylinder (14, 18) aufgebracht wird, und wobei das Betätigungskraft- Eingabeteil (12c) des ersten Bremshebels (12) eine Betätigungskraft auf den jeweiligen Hauptzylinder (14, 18) überträgt.

7. Fahrzeug nach einem der Ansprüche 1 bis 6, **gekennzeichnet durch** eine Lagerungswelle (12b), konfiguriert, drehbar das Betätigungskraft- Eingabeteil (12c) des Bremshebels (12) zu lagern.

8. Fahrzeug nach Anspruch 7, **dadurch gekennzeichnet, dass** das Betätigungskraft-Eingabeteil (12c) einen Pedalbetätigungs- Eingabeabschnitt (12g) aufweist, der durch das Drahtkabel (24) gezogen wird, um einer Betätigungskraft zu gestatten, zu diesem vom Bremspedal (23) übertragen zu werden, wobei der Pedalbetätigungs-Eingabeabschnitt (12g) des Betätigungskraft- Eingabeteils (12c) radial nach außen der Lagerungswelle (12b) positioniert ist.

9. Fahrzeug nach Anspruch 7 oder 8, **dadurch gekennzeichnet, dass** das Betätigungskraft- Eingabeteil (12c) einen Hebelbetätigungs- Eingabeabschnitt (12i) aufweist, der durch den Hebelkörper (12d) gedrückt wird, um einer Betätigungskraft zu gestatten, zu diesem eingegeben zu werden, und der Hebelbetätigungs- Eingabeabschnitt (12i) des Betätigungskraft- Eingabeteils (12c) radial außerhalb der Lagerungswelle (12b) positioniert ist.

10. Fahrzeug nach einem der Ansprüche 1 bis 9, **dadurch gekennzeichnet, dass** das Betätigungskraft- Eingabeteil (12c) einen Wechselhebel- Verbindungsabschnitt (12k) aufweist, verbunden mit einem Gangwechselhebel (39) durch ein weiteres Drahtkabel, wobei der Wechselhebel- Verbindungsabschnitt (12k) konfiguriert ist, den Gangwechselhebel (39) zu ziehen, wenn das Bremspedal (23) oder der Hebelkörper (12d) betätigt wird und das Betätigungskraft- Eingabeteil (12c) gedreht wird.

11. Fahrzeug nach einem der Ansprüche 1 bis 10, **dadurch gekennzeichnet, dass** das Fahrzeug ein Fahrzeug vom Spreizsitz- Typ ist.

## Revendications

1. Véhicule avec une roue avant (2a, 2b), une roue arrière (6a, 6b) et un dispositif de freinage, le dispositif de freinage comprenant :
un premier levier de frein à commande manuelle (12) comportant un élément d'entrée de force de manoeuvre (12c), un second levier de frein à commande manuelle (13),
une pédale de frein à commande par le pied (23), ladite pédale de frein (23) et l'élément d'entrée de force de manoeuvre (12c) étant reliés par un câble métallique (24), une partie au moins d'une force de manoeuvre appliquée à la pédale de frein (23) étant transmise à l'élément d'entrée de force de manoeuvre (12c) du premier levier de frein (12), et
un mécanisme générateur de force de frein comprenant un mécanisme générateur de force de frein de roue avant (14, 15, 16, 17) conçu pour appliquer une force de freinage à la roue avant (2a, 2b) du véhicule, et un mécanisme générateur de force de freinage de roue arrière (18, 19, 20, 21, 24) conçu pour appliquer une force de freinage à la roue arrière (6a, 6b) du véhicule, étant précisé
que le premier levier de frein à commande manuelle (12) est un levier de frein de roue arrière,
que l'élément d'entrée de force de manoeuvre (12c) du levier de frein de roue arrière transmet la force de manoeuvre d'entrée au mécanisme générateur de force de freinage de roue arrière (18, 19, 20, 21, 24), et
que le second levier de frein à commande manuelle (13) est un levier de frein de roue avant qui actionne le mécanisme générateur de force de freinage de roue avant (14, 15, 16, 17).

2. Véhicule selon la revendication 1, **caractérisé en ce que** la force de manoeuvre est transmise au mécanisme générateur de force de freinage de roue arrière (18, 19, 20, 21, 24) par l'intermédiaire de l'élément d'entrée de force de manoeuvre (12c) du premier levier de frein (12) afin d'appliquer une force de freinage à la roue arrière (6a, 6b) même au cas où le premier levier de frein (12) ou la pédale de frein (23) est manoeuvré.

3. Véhicule selon la revendication 1 ou 2, **caractérisé en ce que** le premier levier de frein (12) comprend un corps de levier à commande manuelle (12d).

4. Véhicule selon la revendication 3, **caractérisé en ce qu'**au moment de la manoeuvre de la pédale de frein (23), l'élément d'entrée de force de manoeuvre (12c) est conçu pour fonctionner indépendamment du corps de levier (12d) pour transmettre la force de manoeuvre au mécanisme générateur de force de freinage de roue arrière (18, 19, 20, 21, 24), et au moment de la manoeuvre du premier levier de frein (12), le corps de levier (12d) est conçu pour pousser l'élément d'entrée de force de manoeuvre (12c) pour entrer une force de manoeuvre dans ce dernier.

5. Véhicule selon l'une des revendications 1 à 4, **caractérisé en ce que** les mécanismes générateurs de force de freinage de roue avant et de roue arrière (14, 15, 16, 17 ; 18, 19, 20, 21, 24) comprennent des tuyaux hydrauliques (15, 19) et des éléments de freinage (3a, 3b, 7a, 7b) conçus pour appliquer une force de freinage à la roue avant (2a, 2b) ou à la roue arrière (6a, 6b), une force de manoeuvre transmise au mécanisme générateur de force de freinage de roue arrière (18, 19, 20, 21, 24) à partir de l'élément d'entrée de force de manoeuvre (12c) du premier levier de frein (12) étant transmise à l'élément de freinage (7a, 7b) par l'intermédiaire du tuyau hydraulique (19).

6. Véhicule selon l'une des revendications 1 à 5, **caractérisé en ce que** les mécanismes générateurs de force de freinage de roue avant et de roue arrière (14, 15, 16, 17 ; 18, 19, 20, 21, 24) comprennent des maîtres-cylindres (14, 18) conçus pour générer une pression hydraulique quand une force de manoeuvre leur est transmise, et une force de freinage est appliquée à la roue avant (2a, 2b) ou à la roue arrière (6a, 6b) quand la pression hydraulique est générée dans le maître-cylindre (14, 18), et l'élément d'entrée de force de manoeuvre (12c) du premier levier de frein (12) transmet une force de manoeuvre au maître-cylindre respectif (14, 18).

7. Véhicule selon l'une des revendications 1 à 6, **caractérisé par** un axe de support (12b) conçu pour supporter en rotation l'élément d'entrée de force de manoeuvre (12c) du levier de frein (12).

8. Véhicule selon la revendication 7, **caractérisé en ce que** l'élément d'entrée de force de manipulation (12c) comprend une partie d'entrée de manoeuvre de pédale (12g) qui est tirée par le câble métallique (24) pour permettre qu'une force de manoeuvre lui soit transmise à partir de la pédale de frein (23), la partie d'entrée de manoeuvre de pédale (12) de l'élément d'entrée de force de manoeuvre (12c) étant positionnée radialement vers l'extérieur de l'axe de support (12b).

9. Véhicule selon la revendication 7 ou 8, **caractérisé en ce que** l'élément d'entrée de force de manoeuvre (12c) comprend une partie d'entrée de manoeuvre de levier (12i) qui est poussée par le corps de levier (12d) pour permettre qu'une force de manoeuvre soit entrée dans ledit élément (12c), et la partie d'entrée de manoeuvre de levier (12i) de l'élément d'entrée de force de manoeuvre (12c) est positionnée radialement vers l'extérieur de l'axe de support (12b).

10. Véhicule selon l'une des revendications 1 à 9, **caractérisé en ce que** l'élément d'entrée de force de manoeuvre (12c) comprend une partie de liaison de levier de changement (12k) reliée à un levier de changement de vitesse (39) par un autre câble métallique, la partie de liaison de levier de changement (12k) étant conçue pour tirer le levier de changement de vitesse (39) quand la pédale de frein (23) ou le corps de levier (12d) est actionné et l'élément d'entrée de force de manoeuvre (12c) tourné.

11. Véhicule selon l'une des revendications 1 à 10, **caractérisé en ce que** le véhicule est un véhicule du type à selle.
